# EUROPÄISCHE PATENTSCHRIFT

(11) **EP 3 145 662 B1**
(45) Veröffentlichungstag und Bekanntmachung des Hinweises auf die Patenterteilung: **17.10.2018**
(21) Anmeldenummer: 15726558.8
(22) Anmeldetag: 19.05.2015
(51) Int. Cl.: B22F 3/00, C04B 35/111, C04B 35/486

(54) **VERFAHREN ZUR HERSTELLUNG KERAMISCHER UND/ODER METALLISCHER BAUTEILE**
METHOD FOR PRODUCING CERAMIC AND/OR METAL COMPONENTS
PROCÉDÉ DE PRODUCTION DE COMPOSANTS CÉRAMIQUES ET/OU MÉTALLIQUES

(30) Priorität: 20.05.2014 DE 102014209519
(43) Veröffentlichungstag der Anmeldung: 29.03.2017
(73) Patentinhaber: Fraunhofer Gesellschaft zur Förderung der angewandten Forschung E.V., 80686 München (DE)
(72) Erfinder: SCHEITHAUER, Uwe, 01309 Dresden (DE); SCHWARZER, Eric, 01219 Dresden (DE); POITZSCH, Claudia, 01309 Dresden (DE); RICHTER, Hans-Jürgen, 01257 Dresden (DE); MORITZ, Tassilo, 09599 Freiberg (DE); STELTER, Michael, 09247 Röhrsdorf (DE)
(74) Vertreter: Pfenning, Meinig & Partner mbB
(86) Internationale Anmeldenummer: PCT/EP2015/060968
(87) Internationale Veröffentlichungsnummer: WO 2015/177128

(56) Entgegenhaltungen:
- EP-A1- 0 412 428
- EP-A2- 0 864 551
- WO-A1-2004/039748
- WO-A1-2009/079346
- DE-A1-102007 003 192
- US-A- 6 087 024
- XIUMIN YAO ET AL: "Low-temperature sintering of SiC reticulated porous ceramics with MgO-Al2O3-SiO2 additives as sintering aids", JOURNAL OF MATERIALS SCIENCE, KLUWER ACADEMIC PUBLISHERS, BO, Bd. 42, Nr. 13, 9. März 2007 (2007-03-09), Seiten 4960-4966, XP019503306, ISSN: 1573-4803, DOI: 10.1007/S10853-006-0473-1
- S. Y. GÓMEZ ET AL: "Relationship between Rheological Behaviour and Final Structure of Al2O3 and YSZ Foams Produced by Replica", ADVANCES IN MATERIALS SCIENCE AND ENGINEERING, 1. Januar 2012 (2012-01-01), Seiten 549508/1-9, XP055207705, ISSN: 1687-8434, DOI: 10.1111/j.1151-2916.1991.tb04343.x

## Beschreibung

Die Erfindung betrifft ein Verfahren zur Herstellung keramischer und/oder metallischer Bauteile. Es können so reine keramische, reine metallische oder Verbund-/Kompositbauteile hergestellt werden, bei denen Bereiche aus Metall und andere Bereiche aus Keramik gebildet sind. Außerdem besteht die Möglichkeit, Bereiche von Bauteilen aus unterschiedlichen Metallen oder Keramiken auszubilden. Die Bauteile werden dabei durch Sinterung pulverförmiger Werkstoffe hergestellt.

Es sind verschiedene Möglichkeiten für die Herstellung von zumindest ähnlichen Bauteilen bekannt. So können Bauteile durch Spritzverfahren in Formwerkzeugen in die gewünschte Form gebracht werden. Die dafür erforderlichen Formwerkzeuge sind kostenintensiv, so dass sich ein Einsatz erst bei größeren Stückzahlen amortisiert.

Beim selektiven Lasersintern kann nur eine begrenzte Dichte bei so hergestellten Bauteilen erreicht werden.

Additive Verfahren eignen sich durch den Wegfall von Werkzeugkosten und die hohe Ausnutzung des Materials für die hochflexible Produktion von Einzelteilen und Kleinserien. Allerdings sind die bisher bekannten additiven Verfahren bezüglich der erreichbaren Oberflächengüte, dem Portfolio an verarbeitbaren Materialen oder bezüglich der Eignung zur Ausbildung von Hohlräumen oder anderen inneren Strukturen in so herzustellenden Bauteilen begrenzt.

So sind aus DE 10 2017 003 192 A1 ein keramischer und/oder pulvermetallurgischer Verbundformkörper und ein Verfahren zu seiner Herstellung bekannt.

WO 2004/039748 A1 betrifft ein Verfahren zur Herstellung endkonturnaher metallischer und/oder keramischer Bauteile,

Keramische Verbundkörper und Verfahren zu ihrer Herstellung gehen aus EP 0 412 428 A1 hervor.

Die Offenbarung von EP 0 864 551 A2 betrifft ein Verfahren zum Herstellen eines Bauteiles, das einen Keramik-Metall-Verbundwerkstoff enthält.

WO 2009/079346 A1 beschreibt ein thermisch stabiles mesoporöses Metalloxid mit annähernd konstanter Porengröße.

Ein Verfahren zum Herstellen poröser gesinterter Körper mit definierter Porenstruktur ist in US 6,087,024 B beschreiben.

Xiumin, Y. u.a. beschreiben in "Low-temperature sintering of SiC reticulated porous ceramics with MgO-Al2O3 SiO2 additives as sintered aids"; Journal of Materials science; Kluwer Academic Papers; BO; Bd. 42, Nr. 13; 9. März 2007; S. 4960-4966; XP019503306; ISSN: 1573-4803; DOI: 10.1007/S10853-006-0473-1 keramische Werkstoffe.

Replizierte Schumprodukte werden von S. Y. Gomez u.a. in "Relationship between rheoligical behaviour and final structure of Al O and YSz foams produced by replica"; Advances in Materials Science and Engebneering"; 1. Januar 2012; S. 549508/1-9; XP055207705; ISSN: 1687-8434; DOI: 10.1111/j.1151-2916.tb04343.x beschrieben.

Es ist daher Aufgabe der Erfindung, Möglichkeiten für eine flexible Herstellung von Bauteilen aus Keramik und/oder Metall in unterschiedlichen Geometrien anzugeben, mit denen eine hohe Dichte und gute Oberflächengüte an der äußeren, wie auch der inneren Oberfläche erreicht werden kann.

Erfindungsgemäß wird diese Aufgabe mit einem Verfahren, das die Merkmale des Anspruch 1 aufweist, gelöst. Vorteilhafte Ausgestaltungen und Weiterbildungen der Erfindung können mit in untergeordneten Ansprüchen bezeichneten Merkmalen realisiert werden.

Bei dem erfindungsgemäßen Verfahren zur Herstellung keramischer und/oder metallischer Bauteile wird mit einem Polymer oder Polymergemisch eine mindestens einen Freiraum umschließende Stützstruktur ausgebildet. Der mindestens eine Freiraum wird zumindest in einem vorgebbaren Bereich mit einem plastisch verformbaren oder flüssigen Gemisch mindestens eines Metall- oder Keramikpulvers und mindestens einem organischen Binder befüllt, so dass das Gemisch zumindest teilweise an der Wandung der Stützstruktur anliegt. Es kann auch eine Mischung aus Metall- und Keramikpulver eingesetzt werden.

Anschließend wird bei einer ersten thermischen Behandlung das Gemisch in einen Zustand mit ausreichender Festigkeit auch bei weiterer Temperaturerhöhung zur Einhaltung seiner geometrischen Form überführt. Dabei wird eine Temperatur eingehalten, bei der das die Stützstruktur bildende Polymer formstabil bleibt.

Wiederum daran anschließend wird bei einer zweiten thermischen Behandlung die Temperatur erhöht und dabei das die Stützstruktur bildende Polymer sowie die restlichen Binderbestandteile des Gemisches vollständig zersetzt und das Metall- und/oder Keramikpulver gesintert.

Die Stützstruktur wird durch flächigen oder selektiven Auftrag des nicht ausgehärteten viskosen Polymers auf die Oberfläche eines Trägers ausgebildet. Anschließend kann bei einem flächigen Auftrag eine lokal definierte Aushärtung des Polymers durch einen lokal definierten Energie- oder Stoffeintrag erfolgen und wiederum anschließend daran kann nicht ausgehärtetes Polymer entfernt werden. Dazu kann beispielsweise ein Lösungsmittel eingesetzt werden. Alternativ kann nicht für die Stützstruktur benötigtes Polymer ausgewaschen, abgeblasen oder abgesaugt werden.
Der Auftrag des Polymers/Polymergemisches für die Stützstruktur kann durch Aufrakeln, Aufwalzen, Dispensen oder Drucken erfolgen, was bevorzugt in dosierter Form erreicht werden sollte.
Bei einem selektiven Auftrag kann das Polymer lediglich in Bereichen, in denen eine Stützstruktur ausgebildet werden soll, aufgetragen und dort ausgehärtet werden. Ein selektiver lokal definierter Auftrag kann durch Besprühen oder mittels eines Dispensers lediglich in Bereichen, in denen eine Stützstruktur ausgebildet werden soll, erfolgen.
Durch lokal definierte Bestrahlung mit elektromagnetischer Strahlung kann das Polymer ausgehärtet werden. Hierfür kann beispielsweise ein Laserstrahl oder eine Maske, die zwischen einer Strahlungsquelle und dem Polymer angeordnet ist, oder einen andere selektive Strahlungsquelle, mit der eine punkt- oder linienförmige bzw. ortsaufgelöste Bestrahlung möglich ist, eingesetzt werden. Es ist auch ein lokal definierter Stoffeintrag, beispielsweise eines Härters oder Vernetzers, möglich.
Die Stützstruktur kann in mehreren übereinander angeordneten Ebenen durch schichtweisen Auftrag ausgebildet werden. Eine so ausgebildete Stützstruktur kann in Ebenen eine unterschiedliche geometrische Form aufweisen. Dadurch können im späteren Bauteil beispielsweise Kanäle, Hinterschneidungen oder gar Hohlräume ausgebildet werden. Auch die Stützstruktur kann darin vergrabene Hohlräume aufweisen, da dadurch die Menge an zu entfernenden Material und der freiwerdenden Entbinderungsgase reduziert werden kann.

Bei einer schichtweisen Ausbildung einer Stützstruktur kann mindestens ein Gemisch, sukzessive der schichtweisen Ausbildung der Stützstruktur folgend, ebenfalls schichtweise in mindestens einen ausgebildeten Freiraum gefüllt werden. Dadurch können auch feinste Känale/Bereiche innerhalb der Stützstruktur mit dem Gemisch gefüllt werden, in die das Gemisch aufgrund seiner schlechten Fließeigenschaften bei längeren Fließwegen nicht vordringen würde.

Bei einer jeweils abwechselnden Ausbildung von Schichten für eine Stützstruktur und Schichten, die mit dem Gemisch gebildet werden, kann ein Freiraum unter Berücksichtigung kurzer Fließwege gefüllt werden. Dabei können auch kleinste Kavitäten gefüllt und damit minimale Geometrien realisiert werden.

Bei größeren Freiräumen mit nahezu konstanter Geometrie kann es sinnvoll sein, zuerst mehrere Schichten der Stützstruktur auszubilden und dann den gesamten Freiraum auf einmal zu füllen, um die erforderliche Zeit für die Herstellung zu reduzieren.

Es besteht die Möglichkeit, dass in einen Freiraum innerhalb einer Stützstruktur mindestens zwei Gemische mit sich voneinander unterscheidenden Konsistenzen/Zusammensetzungen eingefüllt werden. Dadurch können Bauteile erhalten werden, die aus den entsprechenden für die Gemische eingesetzten Pulverwerkstoffen bestehen können. So kann beispielsweise eine äußere Hülle oder ein Oberflächenbereich eines Bauteils aus einem Werkstoff gebildet sein, der andere Eigenschaften, als ein Werkstoff im Kern eines Bauteils aufweist.

Mehrere unterschiedliche Gemische können in einen Freiraum neben- und/oder übereinander eingefüllt werden.

Bei einer in mehreren Ebenen sukzessive ausgebildeten Stützstruktur kann mindestens ein Gemisch in dabei neu ausgebildete Freiräume eingefüllt werden, die in mehreren Ebenen ebenfalls sukzessive beim Aufbau der Stützstruktur ausgebildet werden und dabei im Bauteil unterschiedliche geometrische Formen, Dimensionierungen und Positionen aufweisen können.

Werden mehrere Gemische gemeinsam in einen Freiraum eingefüllt, kann dabei ein Hilfspolymer genutzt werden, um die gewünschten Geometrien für die beiden Bereiche exakt einzustellen. Dazu wird in den zu füllenden Freiraum in der Stützstruktur zunächst mit dem Hilfspolymer eine weitere Stützstruktur erstellt, die den Freiraum auf den Bereich verkleinert, in den das erste Gemisch eingefüllt werden soll. Nachdem dies eingefüllt wurde, kann das Hilfspolymer entfernt werden und es bleibt der Bereich frei, der anschließend mit dem zweiten Gemisch gefüllt werden kann. Dieser Vorgang kann auch für mehr als zwei Gemische, die in einen Freiraum gefüllt werden sollen, entsprechend angepasst werden. Das Hilfspolymer sollte dabei wieder leicht zu entfernen sein, was durch Einsatz geeigneter Lösungsmittel und ein Herauslösen erreicht werden kann.

Bei mehreren Gemischen, die in einen Freiraum gefüllt worden sind, kann die Schwindung der eingesetzten Pulverwerkstoffe berücksichtigt werden. Sie kann zumindest annähernd gleich groß gewählt werden.
Zur Verbesserung der Fließfähigkeit/Absenkung der Viskosität und zur Erhöhung der Dichte des/der Gemische(s) kann beispielsweise ein Rütteln oder der Eintrag von Ultraschallwellen genutzt werden, solange noch eine plastische Verformbarkeit/Fließen gegeben ist. Dabei kann das scherviskose Verhalten der einsetzbaren Gemische ausgenutzt werden.

Die einsetzbaren Polymere für die Stützstruktur sollten eine Zersetzungstemperatur von mindestens 250 °C, bevorzugt von mindestens 270 °C und besonders bevorzugt von mindestens 300 °C aufweisen. Dadurch kann eine ausreichende Formstabilität erreicht werden, bis das/die nachfolgend zu versinternde(n) Gemisch(e) eine ausreichende Festigkeit erreicht haben und keine Stützung zur Einhaltung der gewünschten Form mehr erforderlich ist. Zumindest bis nah an diesen Temperaturbereich sollte das Polymer nicht plastisch verformbar sein. Eine Anforderung, die möglichst erfüllt werden sollte, ist eine rückstandsfreie Entfernbarkeit des Polymers.

Für die Ausbildung der Stützstruktur sollte ein Polymer oder Polymergemisch eingesetzt werden, bei dem zumindest ein Teil erst nach Erreichen der Maximaltemperatur bei der ersten thermischen Behandlung zersetzt wird. Dadurch kann eine ausreichende Festigkeit eingehalten werden, bis das Gemisch, mit dem das eigentliche Bauteil gebildet wird, eine ausreichende Festigkeit aufweist und die Funktion der Stützstruktur nicht mehr erfüllt werden muss. Außerdem kann so die Zersetzung schonender erfolgen, da jeweils nur ein Teil des Polymer bzw. Polymergemisches zersetzt und damit eine geringere Menge an gebildeten Gasen pro Zeit freigesetzt wird.

Außerdem sollte eine gegenseitige Beeinflussung des Polymers und den eingesetzten mindestens einen organischen Binder, der Bestandteil des Gemisches ist, vermieden werden.

Bisphenol A-glyerolat dimethacrylaten (BisGMA), Tri(ethylene glycol) dimethacrylaten (TEGDMA), Camphorquinonen oder Ethyl 4 (dimethylamino) benzoaten können beispielsweise jeweils allein oder in einer Mischung von mindestens zwei dieser Polymere als Polymer eingesetzt werden. Alternativ können auch Polyvinylalkohol, Acryllatex, der andere Polymerdsipersionen jeweils allein oder auch in einer Mischung davon zur Erstellung der Stützstruktur eingesetzt werden. Die für die Ausbildung der Stützstruktur geeignete Viskosität des eingesetzten Polymers kann mit einem Lösungsmittel für das jeweilige Polymer eingestellt werden.

Als organische Binder für die Gemische können beispielsweise Bienenwachs, Paraffin oder Pyrollidone bzw. eine Mischung aus diesen verwendet werden.

Die einsetzbaren Gemische sollten Feststoffanteile von mindestens 40 % aufweisen. Die eingesetzten Pulver sollten möglichst kleine Partikelgrößen d₅₀ aufweisen, die bei Metallen kleiner 15 µm und bei Keramiken kleiner 5 µm sein sollten. Man kann die bei der Erfindung einsetzbaren Gemische auch als 3DTP-Massen bezeichnen.

Vorteilhaft sollte ein keramische und/oder metallische Partikel sowie einen organischen Binder enthaltendes Gemisch eingesetzt werden, dass bei normaler Umgebungstemperatur oder der Verarbeitungstemperatur plastisch verformbar ist. Bei höheren Temperaturen kann es eine reduzierte Viskosität aufweisen oder gar flüssig sein. Die Umgebungs- oder Verarbeitungstemperatur kann im Bereich 20 °C ± 10 °C und bevorzugt einer Verarbeitungstemperatur im Bereich 80 °C ± 40 °C gewählt werden.

Eine Verringerung der Viskosität kann auch bei wirkenden Scherkräften erreicht werden.

Mit der Erfindung können gesinterte Bauteile mit sehr hoher Dichte, Oberflächengüte, in Kombination mehrerer Werkstoffe, in verschiedensten geometrischen Formen, auch mit Hohlräumen sehr flexibel hergestellt werden. Viele Nachteile des Standes der Technik können so vermieden werden.

Nachfolgend soll die Erfindung anhand von Beispielen näher erläutert werden.

### Beispiel 1

Für die Herstellung eines Bauteils aus nichtrostendem Stahl 17-4 PH wurde ein Pulver mit einer mittleren Partikelgröße d₅₀ von 12,2 µm mit einer Mischung aus Paraffin und Bienenwachs bei einem Feststoffanteil von 47 Vol-% über 2 h in einem Dissolver homogenisiert. Anschließend wurde dieses Gemisch bei einer Temperatur von 100 °C in den Freiraum einer rahmenförmigen Stützstruktur eingefüllt. Die rahmenförmige Stützstruktur wurde vorab aus BisGMA durch schichtweisen Auftrag und sukzessiver lokal definierter Bestrahlung mit elektromagnetischer Bestrahlung in den einzelnen aufgetragenen Schichten ausgehärtet. Überschüssiges Polymer wurde mit einer Absaugvorrichtung entfernt. Diese Entfernung kann auch durch Auswaschen mit Lösungsmittel, z.B. Ethanol erfolgen.

Dabei kann auch das mit dem metallischen Pulver und der Bindermischung gebildete Gemisch sukzessive schichtweise, in den sich entsprechend durch die schichtweise Ausbildung der Stützstruktur vergrößernden Freiraum eingefüllt werden.

Nach dem Einfüllen des Gemisches, das den Freiraum innerhalb der rahmenförmigen Stützstruktur vollständig ausfüllte und dem Erhalt eines Grünkörpers mit ausreichender Festigkeit, erfolgte eine erste thermische Behandlung an Luft, bei der erste organische Binderanteile entfernt wurden, so dass das Gemisch danach kein thermoplastisches Verhalten mehr aufwies. Dabei wurde eine Heizrate von 18 K/h bis zu einer Temperatur von 270 °C eingehalten. Das im Freiraum enthaltene Gemisch hatte dabei eine ausreichende Formstabilität erreicht.

Im Anschluss daran wurde bei einer zweiten thermischen Behandlung die Temperatur auf maximal 1350 °C bei Einhaltung einer Heizrate von 4 K/min erhöht und das Metallpulver gesintert. Zu Beginn dieser zweiten thermischen Behandlung erfolgte die thermische Zersetzung des die rahmenförmige Stützstruktur bildenden Polymers. Bis zu einer Temperatur von 800 °C wurde mit einer Heizrate von 15 K/h aufgeheizt, da in diesem Temperaturbereich noch die restlichen, in dem Gemisch enthaltenen organischen Komponenten entfernt worden sind.

Die zweite thermische Behandlung wurde in einer Argon-/Wasserstoffatmosphäre durchgeführt.

Das so erhaltene Bauteil aus dem Stahlwerkstoff hatte eine Dichte, die 99,3 % der theoretischen Dichte entspricht.

### Beispiel 2

Für die Herstellung eines Bauteils aus Yttrium-stabilisiertem Zirkonoxid (YSZ) mit 3 mol-% Y₂O₃ wurde ein entsprechendes Pulver dieses Werkstoffs mit einer mittleren Partikelgröße d₅₀ von 0,3 µm bei einem Feststoffanteil von 45 Vol.-% mit einer Mischung von Paraffin und Bienenwachs über 72 h in einer Kugelmühle homogenisiert.

Dieses Gemisch wurde in den Freiraum einer rahmenförmigen Stützstruktur, wie sie auch beim Beispiel 1 genutzt wurde, eingefüllt.

Die beiden thermischen Behandlungen wurden bei den gleichen Bedingungen, wie beim Beispiel 1 durchgeführt. Bei einer möglichen Sinterung dieser Keramik kann aber auf die Argon-/Wasserstoffatmosphäre verzichtet werden, beide thermischen Behandlungen erfolgten an Luft. In diesem Fall ist aber die maximale Temperatur bei der zweiten thermischen Behandlung auf 1500 °C zu erhöhen.

Das so erhaltene Bauteil aus dem YSZ hatte eine Dichte, die 99,9 % der theoretischen Dichte entspricht.

### Beispiel 3

Für die Herstellung eines Bauteils aus Al₂O₃ wurde ein entsprechendes Pulver dieses Werkstoffs mit einer mittleren Patikelgröße d₅₀ von 1,7 µm bei einem Feststoffanteil von 67 Vol.-% mit einer Mischung bestehend aus Paraffin und Bienenwachs über 72 h in einer Kugelmühle homogenisiert.

Dieses Gemisch wurde in den Freiraum einer rahmenförmigen Stützstruktur, wie sie auch beim Beispiel 1 genutzt wurde, eingefüllt.

Die beiden thermischen Behandlungen wurden bei den gleichen Bedingungen, wie beim Beispiel 2 durchgeführt. Bei der Sinterung an Luft wurde eine maximale Temperatur bei der zweiten thermischen Behandlung von 1600 °C eingehalten.

Das so erhaltene Bauteil aus dem Aluminiumoxid hatte eine Dichte, die 99,2 % der theoretischen Dichte entspricht.

## Patentansprüche

1. Verfahren zur Herstellung keramischer und/oder metallischer Bauteile, bei dem mit einem Polymer eine mindestens einen Freiraum umschließende Stützstruktur durch flächigen oder selektiven Auftrag des nicht ausgehärteten viskosen Polymers oder Polymergemisch auf die Oberfläche eines Trägers ausgebildet wird und
bei dem mindestens ein Freiraum zumindest in einem vorgebbaren Bereich mit einem plastisch verformbaren oder flüssigem Gemisch mindestens eines Metall- oder Keramikpulvers und mindestens einem organischen Binder befüllt wird, so dass das Gemisch zumindest teilweise an der Wandung der Stützstruktur anliegt und
anschließend bei einer ersten thermischen Behandlung das Gemisch in einen Zustand mit ausreichender Festigkeit zur Einhaltung seiner geometrischen Form überführt und dabei eine Temperatur eingehalten wird, bei der das die Stützstruktur bildende Polymer formstabil bleibt, und
anschließend daran bei einer zweiten thermischen Behandlung die Temperatur erhöht und dabei das die Stützstruktur bildende Polymer vollständig zersetzt und das Metall- und/oder Keramikpulver gesintert wird.

2. Verfahren nach Anspruch 1, **dadurch gekennzeichnet, dass** anschließend an den Auftrag der Stützstruktur bei einem flächigen Auftrag eine lokal definierte Aushärtung des Polymers durch einen lokal definierten Energieeintrag oder Stoffeintrag erfolgt und anschließend nicht ausgehärtetes Polymer entfernt wird und
bei einem selektiven Auftrag das Polymer lediglich in Bereichen, in denen eine Stützstruktur ausgebildet werden soll aufgetragen und dort ausgehärtet wird.

3. Verfahren nach Anspruch 1 oder 2, **dadurch gekennzeichnet, dass** die Stützstruktur in mehreren übereinander angeordneten Ebenen durch schichtweisen Auftrag ausgebildet wird.

4. Verfahren nach dem vorhergehenden Anspruch, **dadurch gekennzeichnet, dass** mindestens ein Gemisch sukzessive der schichtweisen Ausbildung der Stützstruktur folgend, ebenfalls schichtweise in mindestens einen ausgebildeten Freiraum gefüllt wird, bevor die nächste Schicht der Stützstruktur ausgebildet wird.

5. Verfahren nach einem der vorhergehenden Ansprüche, **dadurch gekennzeichnet, dass** eine Stützstruktur ausgebildet wird, die in Ebenen eine unterschiedliche geometrische Form aufweist.

6. Verfahren nach einem der vorhergehenden Ansprüche, **dadurch gekennzeichnet, dass** ein flächiger Auftrag für die Ausbildung einer Stützstruktur durch Aufrakeln, Walzen, Drucken oder Dispensen, bevorzugt in dosierter Form erfolgt und mindestens der Bereich, in dem eine Stützstruktur ausgebildet werden soll, durch lokal definierte Bestrahlung mit elektromagnetischer Strahlung ausgehärtet wird oder ein selektiver lokal definierter Auftrag durch Besprühen oder mittels eines Dispensers lediglich in Bereichen, in denen eine Stützstruktur ausgebildet werden soll, erfolgt.

7. Verfahren nach einem der vorhergehenden Ansprüche, **dadurch gekennzeichnet, dass** in einen Freiraum innerhalb einer Stützstruktur mindestens zwei Gemische mit sich voneinander unterscheidenden Konsistenzen/Zusammensetzungen eingefüllt werden.

8. Verfahren nach dem vorhergehenden Anspruch, **dadurch gekennzeichnet, dass** mindestens zwei Gemische neben- und/oder übereinander angeordnet eingefüllt werden.

9. Verfahren nach einem der vorhergehenden Ansprüche, **dadurch gekennzeichnet, dass** bei einer in mehreren Ebenen sukzessive ausgebildeten Stützstruktur mindestens ein Gemisch in dabei neu ausgebildete Freiräume eingefüllt wird.

10. Verfahren nach einem der vorhergehenden Ansprüche, **dadurch gekennzeichnet, dass** ein keramische und/oder metallische Partikel sowie einen organischen Binder enthaltendes Gemisch eingesetzt wird, dass bei normaler Umgebungstemperatur oder der Verarbeitungstemperatur plastisch verformbar oder fließfähig ist.

11. Verfahren nach einem der vorhergehenden Ansprüche, **dadurch gekennzeichnet, dass** für die Ausbildung der Stützstruktur ein Polymer oder Polymergemisch eingesetzt wird, bei dem zumindest ein Teil erst nach Erreichen der Maximaltemperatur bei der ersten thermischen Behandlung zersetzt wird.

## Claims

1. A method of manufacturing ceramic and/or metal components in which a support structure surrounding at least one free space is formed by a polymer by an areal or selective application of the non-hardened viscous polymer or polymer mixture onto the surface of a carrier and in which at least one free space is filled in at least one predefinable portion with a plastically deformable or liquid mixture of at least a metal powder or ceramic powder and with at least one organic binder such that the mixture contacts the wall of the support structure at least in part; and
subsequently, in a first thermal treatment, the mixture is transferred into a state having a sufficient strength for maintaining its geometrical shape and thereby a temperature is observed at which the polymer forming the support structure remains stable in shape; and subsequently, in a second thermal treatment, the temperature is increased and in so doing the polymer forming the support structure is completely decomposed and the metal powder and/or ceramic powder is/are sintered.

2. A method in accordance with claim 1, **characterized in that** the support structure by an areal application, a locally defined hardening of the polymer takes place by a locally defined energy input or material input and, subsequently, non-hardened polymer is removed subsequently to the application; and
on a selective application, the polymer is only applied in portions in which a support structure is to be formed and will be hardened there.

3. A method in accordance with claim 1 or claim 2, **characterized in that** the support structure is formed by layer-wise application in a plurality of planes arranged above one another.

4. A method in accordance with the preceding claim, **characterized in that** at least one mixture is filled successively into at least one formed free space successively following the layer-wise formation of the support structure and likewise in a layer-wise manner before the next layer of the support structure is formed.

5. A method in accordance with one of the preceding claims, **characterized in that** a support structure is formed which has different geometrical shapes in planes.

6. A method in accordance with one of the preceding claims, **characterized in that** an areal application takes place for the formation of a support structure by spreading, rolling, printing or dispensing, preferably in a metered form, and at least the region in which a support structure is to be formed is hardened by locally defined irradiation with electromagnetic radiation or a selectively locally defined application takes place by spraying or by means of a dispenser only in portions in which a support structure is to be formed.

7. A method in accordance with one of the preceding claims, **characterized in that** at least two mixtures having mutually different consistencies/compositions are filled into a free space within a support structure.

8. A method in accordance with the preceding claim, **characterized in that** at least two mixtures are filled in arranged next to one another and/or above one another.

9. A method in accordance with one of the preceding claims, **characterized in that**, with a support structure formed successively in a plurality of planes, at least one mixture is filled into free spaces which are newly formed in this process.

10. A method in accordance with one of the preceding claims, **characterized in that** a mixture containing ceramic and/or metal particles and an organic binder is used that is plastically deformable or flowable at normal ambient temperature or at the processing temperature.

11. A method in accordance with one of the preceding claims, **characterized in that** a polymer or polymer mixture is used for the formation of the support structure in which at least a portion is only decomposed after reaching the maximum temperature in the first thermal treatment.

## Revendications

1. Procédé de fabrication de pièces céramiques et/ou métalliques,
dans lequel, à l'aide d'un polymère, on réalise une structure support entourant un espace libre, par application sélective ou en pleine surface, sur la surface d'un support, du polymère ou du mélange de polymères visqueux non durci, et
dans lequel au moins un espace libre, au moins dans une zone prédéfinissable, est rempli d'un mélange liquide ou pouvant subir une déformation plastique d'au moins une poudre métallique ou céramique, et d'au moins un liant organique, de telle sorte que le mélange s'appuie au moins partiellement contre la paroi de la structure support, et
ensuite, lors d'un premier traitement thermique, le mélange est converti à un état présentant une solidité suffisante pour conserver sa forme géométrique, ce à l'occasion de quoi est maintenue une température à laquelle le polymère formant la structure support conserve sa stabilité de forme, et
puis, lors d'un deuxième traitement thermique, on élève la température, le polymère formant la structure support subissant alors une décomposition complète, et la poudre métallique et/ou céramique subissant un frittage.

2. Procédé selon la revendication 1, **caractérisé en ce que**, après application de la structure support, et dans le cadre d'une application en pleine surface, on procède à un durcissement localement défini du polymère grâce à un apport localement défini d'énergie ou de matière, le polymère non durci étant ensuite éliminé, et
dans le cadre d'une application sélective, ce n'est que dans les zones dans lesquelles doit être formée une structure support que le polymère est appliqué, et y est durci.

3. Procédé selon la revendication 1 ou 2, **caractérisé en ce que** la structure support est réalisée par application couche par couche, avec plusieurs plans disposés les uns au-dessus des autres.

4. Procédé selon la revendication précédente, **caractérisé en ce qu'**au moins un mélange est successivement, après la formation couche par couche de la structure support, lui aussi introduit couche par couche dans au moins un espace libre formé, avant formation de la couche suivante de la structure support.

5. Procédé selon l'une des revendications précédentes, **caractérisé en ce qu'**on forme une structure support qui dans ses plans présente une forme géométrique différente.

6. Procédé selon l'une des revendications précédentes, **caractérisé en ce qu'**une application en pleine surface pour former une structure support est réalisée par application à la racle, au rouleau, par impression ou par distribution, de préférence sous forme dosée, et on procède au durcissement d'au moins la zone dans laquelle doit être formée une structure support, par une irradiation localement définie d'un rayonnement électromagnétique, ou encore on procède à une application sélective localement définie par pulvérisation ou à l'aide d'au moins un distributeur, seulement dans les zones dans lesquelles doit être formée une structure support.

7. Procédé selon l'une des revendications précédentes, **caractérisé en ce qu'**on introduit dans un espace libre à l'intérieur d'une structure support au moins deux mélanges présentant des consistances/des compositions différentes l'une de l'autre.

8. Procédé selon la revendication précédente, **caractérisé en ce qu'**on introduit au moins deux mélanges, disposés l'un à côté et/ou l'un au-dessus de l'autre.

9. Procédé selon l'une des revendications précédentes, **caractérisé en ce que**, dans le cas d'une structure support formée successivement en plusieurs plans, on introduit au moins un mélange dans les espaces libres nouvellement formés.

10. Procédé selon l'une des revendications précédentes, **caractérisé en ce qu'**on utilise un mélange contenant des particules céramiques et/ou métalliques, ainsi qu'un liant organique, qui dans les conditions ambiantes normales ou à la température de mise en oeuvre est fluide ou peut subir une déformation plastique.

11. Procédé selon l'une des revendications précédentes, **caractérisé en ce qu'**on utilise pour la formation de la structure support un polymère ou un mélange de polymères dont au moins une partie n'est décomposée, lors du premier traitement thermique, que lorsqu'est atteinte la température maximale.
